# EUROPEAN PATENT SPECIFICATION

(11) **EP 3 011 282 B1**
(45) Date of publication and mention of the grant of the patent: **17.02.2021**
(21) Application number: 14731905.7
(22) Date of filing: 17.06.2014
(51) Int. Cl.: G01G 19/10

(54) **A METHOD AND A DEVICE FOR DETERMINING THE WEIGHT OF A LOAD**
VERFAHREN UND VORRICHTUNG ZUR BESTIMMUNG DES GEWICHTS EINER LADUNG
PROCÉDÉ ET DISPOSITIF POUR DÉTERMINER LE POIDS D'UNE CHARGE

(30) Priority: 20.06.2013 DK 201370336
(43) Date of publication of application: 27.04.2016
(73) Proprietor: Griptech b.v., 6301 HR Valkenburg (NL)
(72) Inventor: LARSEN, Knud-Erik, DK-3730 Nexø (DK)
(74) Representative: Algemeen Octrooi- en Merkenbureau B.V.
(86) International application number: PCT/DK2014/050169
(87) International publication number: WO 2014/202086

(56) References cited:
- EP-A2- 1 431 726
- WO-A1-98/46972

## Description

The present invention relates in a first aspect to a method for determining the weight of a load. In a second aspect, the present invention relates to a weighing device.

More specifically, the invention according to the first aspect relates to a method for determining the weight of a load using a hydraulic or pneumatic actuator of a lifting mechanism, the method comprising the steps of increasing the actuator pressure to an initial value, in which static friction of the lifting mechanism is no longer able to maintain the position of the load, maintaining an actuator motion pressure until the load is lifted to a desired suspended position, adjusting the actuator pressure to a first threshold pressure, in which static friction of the lifting mechanism is no longer able to maintain the position of the load, determining a first threshold pressure value for the first threshold pressure, adjusting the actuator pressure to a second threshold pressure, in which static friction of the lifting mechanism is no longer able to maintain the position of the load, determining a second threshold pressure value for the second threshold pressure, and calculating based on the first and second threshold pressure values the weight of the load.

The principle of this measuring method is known from I WO98/46972 and EP 0 991 927 B1, which describes a method for determining the weight of an aircraft utilizing the lifting mechanisms of the respective landing gear struts. Hydraulic fluid is injected into each of the landing gear struts to increase the internal strut pressure until static friction is overcome and the strut begins to extend. As it does so, the friction transitions from static friction to dynamic friction that is lower, which reduces the strut's resistance against moving, and the internal strut pressure suddenly drops. The highest strut pressure measured is stored. Then withdrawal of hydraulic fluid from the landing gear strut is initiated, which brings the strut to a halt. Withdrawal of hydraulic fluid from the strut is continued until static friction is overcome and the strut begins to collapse. As it does so, the static friction transitions to lower dynamic friction, which reduces the strut's resistance against moving, and the internal strut pressure suddenly increases due to the collapse of the strut. The lowest strut pressure measured is stored. For each strut the highest and lowest measured strut pressure is averaged to identify the strut pressure exclusive of effects originating from *inter alia* overcoming friction. On basis of this net strut pressure the weight supported by each strut is derived.

Another type of method for determining the weight of a load is dynamic measuring, where the determination of the load's weight is based on moving the load with the exact same speed in two opposite directions. This, at least theoretically, should eliminate erroneous input coming from e.g. acceleration and friction. However, in practise it is extremely difficult to obtain the exact same speed, and even small variations lead to erroneous results.

Attempts have been made to find ways to compensate for variations in speed and other sources of errors, such as variations in the viscosity of the hydraulic fluid, varying friction in machine elements etc., however, not fully successfully. Furthermore, as the load has to be moved long enough for a constant speed to be obtained in both directions, the dynamic measuring methods require a great ceiling height and are relatively time-consuming. Particularly when handling an unstable load, moving the load a great distance up is not desirable. Also, the fact that moving the load up and down is necessary makes dynamic measuring impractical for dosage weighing.

The method mentioned in the introduction presents a number of disadvantages as well. One disadvantage being that, even though the load does not have to be moved much, and although the method is less time-consuming than dynamic measuring, injecting and withdrawing hydraulic fluid into and out of, respectively, the actuator at a pace, which, in combination with the applied measuring frequency, is suitable for obtaining a satisfactory precision in the determination of the threshold pressure values, takes a given period of time. A low measuring frequency and/or high requirements as to determination precision necessitates a pressure adjustment rate, which is slow enough to obtain a satisfactory precision in the determination of the threshold pressures.

The time spent on weight determination is really time lost to the manufacturing company, freight forwarder etc., to whom periods of time, where the load cannot be moved, is idle time.

It is a desire to minimize the amount of idle time, including that spent on weight determination. Hence, there is a need tor a speedy method tor determining the weight of a load.

On this background, it is an object of the present invention to mitigate or eliminate at least some of the disadvantages of the prior art. In particular, it is an object to provide a speedy method tor determining the weight of a load according to claim 1 and a device adapted to perform the method according to claim 6.

Up until now no one has thought of utilizing an intermediate pressure, probably because an intermediate pressure has no immediate relevance for the actual determination of the two threshold pressures. However, the inventor of the present invention has realized that by identifying an intermediate pressure, which is based on the actuator motion pressure, this intermediate pressure can be used as a reference, to which the actuator pressure, after the first threshold pressure has been determined, can be regulated before the determination of the second threshold pressure. After having determined the first threshold value, there is no need tor cycles of pressure measurement, evaluation and fine-adjustment of the actuator pressure before the actuator pressure is at the intermediate pressure, to which the pressure can be regulated relatively fast. Hereby time can be saved.

Preferably, the actuator pressure is regulated directly to the intermediate pressure after the first threshold pressure has been determined. Hereby time-consuming fine-adjustment of the actuator pressure is skipped with a taster weight determination method as a result.

In an embodiment of the method according to the first aspect of the invention, the initial actuator pressure value is determined and used as the first threshold pressure value. Hereby even more time may be saved, since the step of determining the first threshold pressure is carried out already in the initial lifting process.

In an embodiment, the intermediate pressure value is offset from the motion pressure value. The amount of offset should be chosen so that the intermediate pressure is lying somewhere between the first and second threshold values.

In an embodiment, the intermediate pressure value is simply offset from the motion pressure value by zero so that the intermediate pressure is identical to the motion pressure value. This effectively ensures that the intermediate pressure lies between the first and second threshold pressures.

Due to leakages through seals and the like, over time, hydraulic fluid will leak out of the actuator during standstill and the actuator pressure will drop. A build-in feature in most lifting mechanisms relevant to this invention, such as fork lift trucks, wheel loaders etc, ensures that hydraulic fluid is injected into the actuator to replace what has leaked out so as to maintain enough pressure for the actuator to maintain its position. This means that once the load has been lifted off ground and the actuator has been brought to a standstill, the pressure prevailing in the actuator at any time will be within the boundaries of the two threshold values, since they demark the pressure limits where the actuator moves.

Thus, in an embodiment, the actuator pressure that happens to prevail, when the step of adjusting the actuator pressure towards the first threshold pressure is initiated, is measured and stored as intermediate pressure and used as intermediate pressure, when the step of determining the second threshold pressure is initiated. Or in other words: The adjustment of the actuator pressure to the second threshold pressure takes place from an intermediate pressure between the first and second threshold pressures, which intermediate pressure is determined as a measurement of a value of a previous intermediate pressure based on the motion pressure. This is advantageous since the intermediate pressure is definitely in between the two threshold values and it does not have to be set to a specific value prior to executing the method.

In an embodiment of the method according to the first aspect of the invention, the adjustment of the actuator pressure from the intermediate pressure to the first and/or second threshold pressure is performed stepwise. This contributes to a high degree of precision in the determination of the respective threshold pressures, since the actuator pressure is measured while being constant.

In an embodiment, the adjustment of the actuator pressure from the intermediate pressure to the first and/or second threshold pressure is performed at a constant rate.

In an embodiment of the method according to the first aspect of the invention, the calculation of the weight of the load based on the first and second threshold pressure values is determined by means of the mean value of the first and second threshold pressure values. Hereby effects coming from acceleration, friction etc in both directions of movement are cancelled out against each other, and only the effect coming from the actual load remains. Having knowledge of the relevant acceleration due to gravity, the pressure area of the actuator etc, the weight of the load can be calculated on this background.

In a second aspect, the present invention relates to a weighing device adapted to perform the method according to the first aspect of the present invention. In one embodiment, the weighing device comprises a fork lift truck. In another embodiment, the weighing device comprises a wheel loader.

Examples of embodiment(s) of the first and second aspect of the invention will be elaborated in more detail below with reference to the appended figures, where
Fig. 1 is a schematic representation of a course of the actuator pressure over time in a weighing device according to the second aspect of the invention,
Fig. 2 is a schematic representation of a course of the actuator pressure over time in a weighing device according to the second aspect of the invention during execution of the method according to the first aspect of the invention,
Fig. 3 is a diagrammatic representation of a first embodiment of a weighing device according to the second aspect of the invention adapted to perform a method according to the first aspect of the invention, and
Fig. 4 is a diagrammatic representation of a second embodiment of a weighing device according to the second aspect of the invention adapted to perform a method according to the first aspect of the invention.

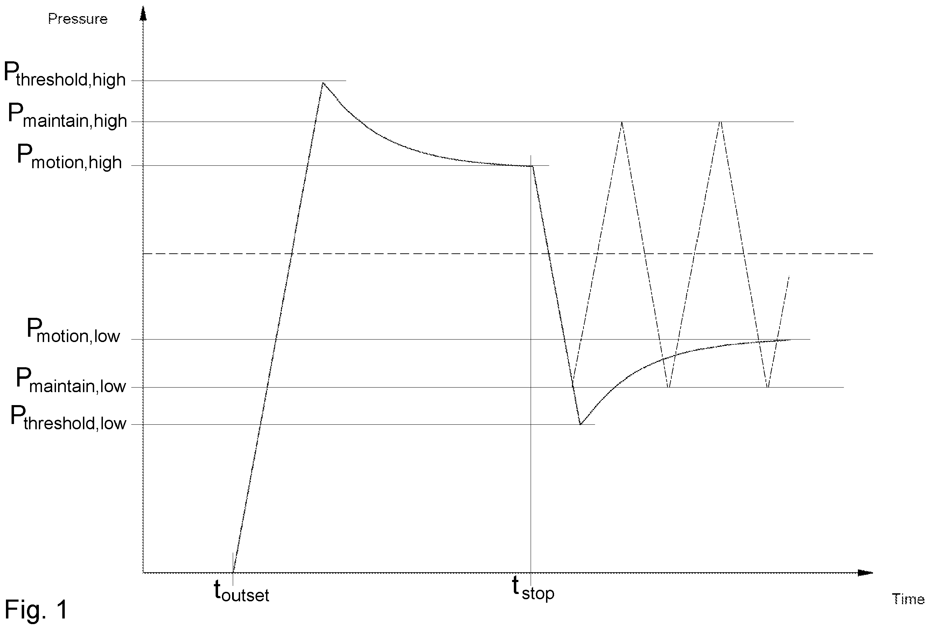

What is schematically depicted in Fig. 1 is the actuator pressure prevailing inside a linear, hydraulic actuator of for instance fork lift truck during an ordinary lifting process.

It is understood that a behavior similar to those described in this specification in relation to the hydraulic actuator of a fork lift truck could be observed in the hydraulic actuator of a wheel loader or other similar lifting device, in a pneumatic actuator or other similar actuator of a lifting device adapted to implement the method according to the first aspect of the present invention.

The abscissa of the graph in Fig. 1 indicates time (t), and the ordinate indicates the actuator pressure (P). In the outset, the load rests on the ground ready to be lifted. It is understood that the outset circumstances could be different, for instance, the load could be in a suspended position above ground already. In that case the actuator pressure would be different from zero in the outset.

Now, starting from the outset at tₒᵤₜₛₑₜ, hydraulic fluid is beginning to be injected into the actuator, whereby the actuator pressure gradually increases. Actuator pressure builds up, but as long as the force coming from the actuator pressure does not exceed the opposing force coming from *inter alia* static friction and the weight of the load, the actuator does not move.

At some point, the actuator pressure reaches a point, P_{threshold, high}, where the weight of the load and the static friction is overcome and the actuator suddenly begins to move upwards. The static friction transitions to lower dynamic friction.

This causes the actuator pressure to drop. While the actuator moves upwards, an essentially steady state sets in, and the actuator pressure stabilizes at an actuator motion pressure, P_{motion, high}.

When the load has reached a desired suspended position the injection of hydraulic fluid into the actuator is stopped (at tₛₜₒₚ) and the actuator comes to a halt. The actuator is yet again subject to the higher static friction rather than the lower dynamic friction.

Due to small leakages past seals etc in the hydraulic system, hydraulic fluid slowly seeps out of the actuator. As long as no hydraulic fluid is injected into the actuator to replace the hydraulic fluid that has seeped out, the result is a decrease in actuator pressure. Due to static friction, however, the actuator does not move, until the actuator pressure reaches a point, P_{threshold,low}, where static friction is overcome and the actuator suddenly begins to move downwards. The sudden downwards movement of the actuator and the load with it causes the actuator pressure to increase.

Eventually, while the actuator moves downwards, an essentially steady state sets in and the actuator pressure stabilizes at an actuator motion pressure, P_{motion, low}.

Many lifting devices have an inbuilt feature that is able to prevent the actuator from moving out of its position and thus maintaining the load in the desired position above ground once lifted there. The inbuilt feature of the lifting device is able to inject hydraulic fluid into the actuator to replace the hydraulic fluid that has seeped out of the actuator chamber past seals etc in the hydraulic system.

The actuator pressure schematically depicted with a broken line in Fig. 1 is an example of a course that the actuator pressure may take when subjected to an inbuilt position maintenance feature of a lifting device.

As is seen, as soon as the actuator pressure drops below a certain lower pressure limit, P_{maintain,low}, hydraulic fluid is injected into the actuator in order to (at least partially) compensate for the hydraulic fluid that has been lost through seepage and to increase the actuator pressure so as to maintain the actuator in the desired position. The lower pressure limit, P_{maintain,low}, may, as in the depicted example, be a preset value. It may be set to a higher or lower value than depicted in the figure, however, no lower than the lower pressure threshold, P_{threshold,low}. The lower pressure limit P_{maintain,low} may simply be identical to the lower pressure threshold, P_{threshold,low}.

The injection of hydraulic fluid continues until the actuator pressure reaches a certain upper pressure limit, P_{maintain, high}, after which point the injection of hydraulic fluid is stopped. The higher pressure limit, P_{maintain,high}, may, as in the depicted example, be a preset value. It may be set to a higher or lower value than depicted in the figure, however, no higher than the higher pressure threshold, P_{threshold,high}. However, in principle, the higher pressure limit P_{maintain,high} may simply be the higher pressure threshold, P_{threshold,high}.

As the injection of hydraulic fluid is stopped, seepage past seals will yet again cause the actuator pressure to drop, and the inbuilt position maintenance feature of the lifting device will yet again see to that the pressure is increased, and so on. The described pattern is repeated as long as the load is to be kept at its desired position above ground.

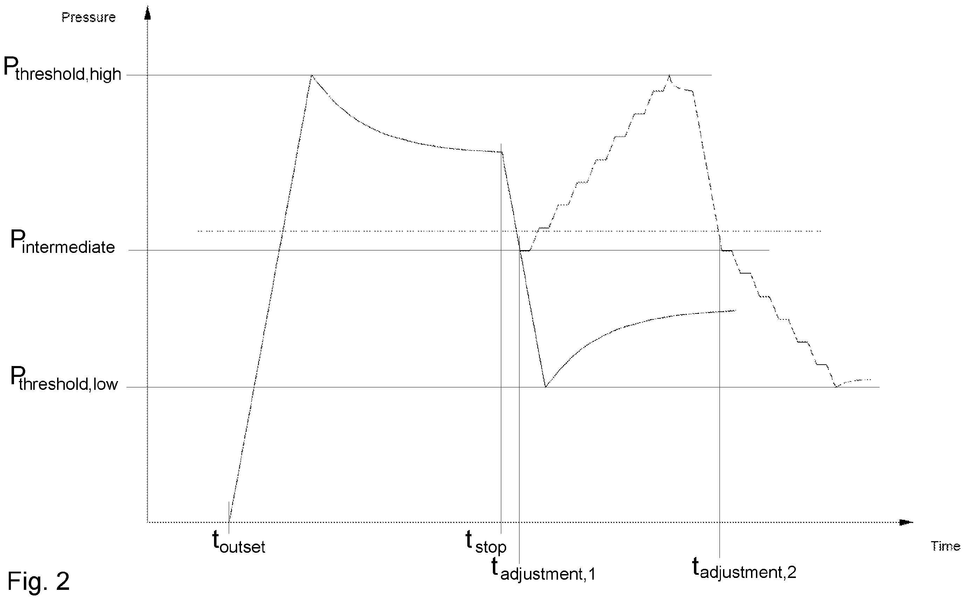

Now, turning to Fig. 2, it schematically depicts the actuator pressure during the process of determining the weight of a load according to the invention. Similar to Fig. 1, the abscissa of the graph in Fig. 2 indicates time (t), and the ordinate indicates the actuator pressure (P).

The course drawn with a solid line is similar to the lifting process explained above in connection with Fig. 1. The course drawn with a broken line depicts an example of a course that an actuator pressure follows during the weight determination process according the invention.

Hence, following the solid line from the outset, tₒᵤₜₛₑₜ, hydraulic fluid is injected into the actuator chamber to increase the actuator pressure to the higher threshold pressure, P_{threshold,high}, after which point the supply of hydraulic fluid into the actuator is continued in order to sustain the actuator pressure at the actuator motion pressure, P_{motion,high}, until the load has been lifted to its desired position above ground. Hereafter the supply of hydraulic fluid to the actuator is stopped at tₛₜₒₚ.

The desired suspended position does not have to be high above ground. Actually, a hardly visible movement of the actuator will suffice as long as the load is free of the ground. In principle, however, the load may be lifted arbitrarily high above the ground.

Then the steps for determining the first threshold pressure are commenced following the broken line in Fig. 2. In the depicted example, the pressure adjustment step is initiated right after the initial lifting of the load, at time = t_{adjustment,1}. If more time had passed from the actuator was brought to a halt until the adjustment step was initiated, the inbuilt position maintenance feature of the lifting device would have maintained the pressure within the boundaries of P_{maintain,high} and P_{maintain,low} along the zigzag-course as described above in connection with Fig. 1. The adjustment step may be initiated at any point during maintenance of the actuator position from whatever actuator pressure prevails at that instant.

At the initiation of the adjustment step, the prevailing actuator pressure is measured and stored as an intermediate actuator pressure, P_{intermediate}. Since the actuator pressure has been maintained to keep the actuator still, the intermediate actuator pressure P_{intermediate} is known to lie somewhere in between the higher and the lower maintenance actuator pressures, P_{maintenance, low} and P_{maintenance, high} and thus, ultimately, between the higher and lower threshold pressures, P_{threshold,high} and P_{threshold,low}.

With the intermediate pressure, Pintermediate, as starting point, a stepwise supply of hydraulic fluid into the actuator is initiated at time = t_{adjustment, 1}. The stepwise injection of hydraulic fluid into the actuator causes a stepwise increase in the actuator pressure. After each injection of hydraulic fluid, the actuator pressure is measured and compared to the previously measured actuator pressure. As long as the new pressure is higher than the previous pressure, the point, where the weight of the load and the static friction is overcome, the actuator moves upwards and the static friction transitions to dynamic friction, has not yet been reached.

The stepwise injection of hydraulic fluid continues until the new actuator pressure is suddenly smaller than the previous actuator pressure. Once the measured actuator pressure is smaller than the previously measured actuator pressure, this indicates that the point where the weight of the load and the static friction has been overcome, the actuator has moved upwards and the static friction has transitioned to dynamic friction, has been reached. Thus, the previously measured actuator pressure, which is higher than or equal to the newly measured one is stored as a first threshold pressure, P_{threshold, high}.

Now, having identified the higher threshold pressure, P_{threshold, high}, the actuator pressure is regulated back down to the intermediate actuator pressure, P_{intermediate}.

Preferably, the actuator pressure is regulated directly and essentially immediately back to the intermediate actuator pressure. The faster a regulation, the more vertical the pressure course is during the pressure regulation after the determination of the higher threshold pressure, P_{threshold,high}, before reaching the intermediate actuator pressure, P_{intermediate}. As indicated by the smooth line, no time is spent on stepwise fine-adjustment of the actuator pressure at this point in the process. Since the intermediate actuator pressure is positively known to be higher than the lower threshold pressure (and lower than the higher threshold pressure), there is no need to waste time on adjusting the actuator pressure in small decrements all the way down from the higher threshold pressure to the intermediate pressure.

Decreasing the actuator pressure almost momentarily after determination of the higher threshold pressure entails that the actuator barely moves. Hence, the method is well suited for applications of dosage weighing.

Now, after having determined the higher threshold pressure, P_{threhold,high}, and starting from the intermediate pressure, P_{intermediate}, a stepwise decrease of the actuator pressure is initiated at time = t_{adjustment,2}. The procedure is similar to that described above for the determination of the higher threshold pressure, only with opposite signs: With the intermediate pressure, P_{intermediate}, as starting point, a gradual withdrawal of hydraulic fluid out of the actuator is initiated at time = t_{adjustment, 2}. The gradual withdrawal of hydraulic fluid out of the actuator causes a stepwise decrease in the actuator pressure. After each withdrawal of hydraulic fluid, the actuator pressure is measured and compared to the previously measured actuator pressure. As long as the new pressure is lower than the previous pressure, the point, where the static friction is overcome, the actuator moves downwards and the static friction transitions to dynamic friction, has not yet been reached.

Once the measured actuator pressure is higher than or equal to the previously measured actuator pressure, this indicates that the point where the static friction has been overcome, the actuator has moved downwards and the static friction has transitioned to dynamic friction, has been reached. Thus, the previously measured actuator pressure, which is lower than or equal to the newly measured one, is stored as the second threshold pressure, P_{threshold, low}.

Now that the two threshold pressure values have been determined, the mass of the load can be calculated on basis of the higher and the lower threshold pressures, when the pressure area of the actuator, the relevant acceleration due to gravity and any gearing ratio between the lifting forks and the hydraulic cylinder of the lifting device are known.

It is understood that, although the adjustments in actuator pressure in this example is performed stepwise, the actuator pressure may alternatively be altered at a constant rate or a combination of both a constant rate and stepwise. For instance, the first pressure adjustment may be performed stepwise and the second pressure adjustment at a constant rate, or oppositely, or both the first and second pressure adjustment may be performed stepwise or at a constant rate.

Also, although the higher threshold pressure in the present example is identified first and the lower threshold pressure is identified afterwards, the lower pressure threshold, P_{threshold,low} may be identified before the higher pressure threshold, P_{threshold,high}.

In that case, the actuator pressure is adjusted stepwise (or constantly) downwards at time = t_{adjustment,1} until the lower threshold pressure, P_{threshold, low}, has been identified. Then the actuator pressure is regulated directly back up to the intermediate actuator pressure, P_{intermediate}, from where the actuator pressure is adjusted stepwise (or constantly) upwards at time = t_{adjustment,2}, until the higher threshold pressure, P_{threshold, high}, has been identified.

Also, although not depicted in the figures, the first threshold pressure value may be determined already in the initial lifting process. This however, necessitates from the beginning pressure measurements and injection of hydraulic fluid at a pace adapted to the requirements to pressure determination precision and the applied measuring rate.

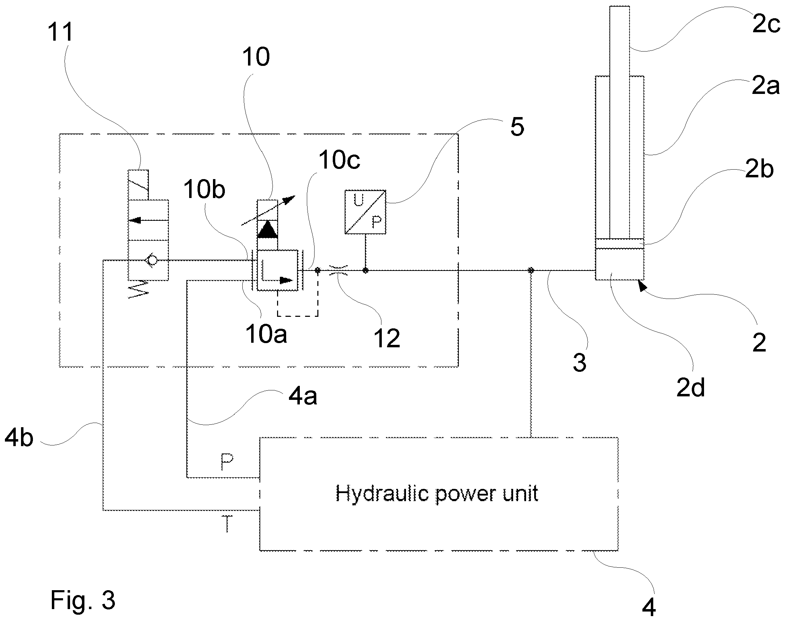

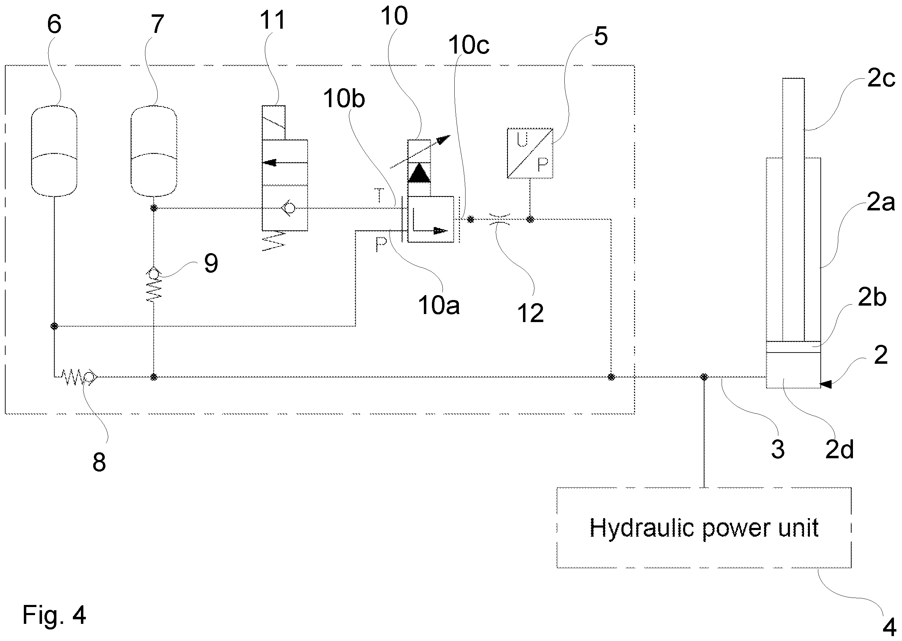

Now, with reference to Figs. 3 and 4, examples of a device adapted to perform the method according to the first aspect of the invention are explained. Elements similar to the different embodiments are denoted with similar reference signs.

Starting with the embodiment schematically depicted in Fig. 3, a hydraulic actuator of a lifting device (which could for instance be a fork lift truck or a wheel loader) is denoted by reference sign 2. The actuator 2 comprises a fixed part, including a cylinder 2a, and a moveable part, including a piston 2b and a piston rod 2c. The actuator 2 is connected to a hydraulic fluid line 3, via which hydraulic fluid can be supplied to and withdrawn from an actuator chamber 2d. The actuator pressure is the pressure existing in the actuator chamber 2d.

A hydraulic power unit 4 of the lifting device is connected to the hydraulic fluid line 3. Although the depicted example utilizes the hydraulic power unit 4 of the lifting device, there could, in principle at least, be provided a supplemental hydraulic power unit for the measuring process.

Also connected to the hydraulic fluid line 3 is a pressure transmitter 5, by means of which the pressure prevailing in the actuator chamber 2d is measured (as it is essentially the same pressure as in the hydraulic fluid line 3). The measured pressure is passed on to a processor or computing unit (not shown).

A three-way pressure regulating valve 10 with a pressure port 10a, a tank port 10b and an outlet port 10c is provided so that the pressure port 10a is connected to a pressure line 4a of the hydraulic power unit 4 and the outlet port 10c is connected to the actuator chamber 2d via the hydraulic fluid line 3. The tank port 10b of the three-way pressure regulating valve 10 is connected to a tank line 4b of the hydraulic power unit 4 via a solenoid valve 11.

The components encircled by the dash-dot-line make a weight determination unit adapted to perform the method according to the invention in collaboration with a lifting device. The unit may be integratedly built into the lifting device adapted to carry or lift loads, such as a fork lift truck, wheel loader, rear dumper, lorry truck or the like, or it may be retrofitted as an aftermarket unit. The interface of the weight determination unit limits itself to three hydraulic fluid lines, the connecting of which enables easy retrofitting.

When the actuator 2 is to be operated during normal operation, hydraulic fluid pressurized by the hydraulic power unit 4 is injected via the hydraulic fluid line 3 and withdrawn the same way.

However, when the weight determination method is performed, hydraulic fluid is passed from the hydraulic power unit through pressure line 4a, through the pressure regulating valve 10, past the pressure transmitter 5 and into the actuator chamber 2d.

During actuator pressure build-up, the solenoid valve 11 is closed so as to prevent pressure relief via the tank port 10b of the pressure regulating valve 10.

When the actuator pressure is to be lowered, the solenoid valve 11 is opened so as to allow flow from the actuator chamber 2d via the pressure regulating valve 10's tank port 10b through the solenoid valve 11 and the tank line 4b into the of the hydraulic power unit 4.

A flow control orifice 12 is arranged between the three-way pressure regulating valve 10 and the pressure transmitter 5 in order to ensure a controlled flow both when hydraulic fluid flow from the actuator 2 towards the pressure regulating valve 10 and when hydraulic fluid flows the opposite way from the pressure regulating valve towards the actuator.

Fig. 4 shows another embodiment, where the pressure line from and the tank line to the hydraulic power unit 4 have been replaced by two hydraulic accumulators 6, 7 in an arrangement, which will be described in more detail in the following.

The first hydraulic accumulator 6 is connected to the hydraulic fluid line 3 via a first non-return valve 8. The first non-return valve 8 allows hydraulic fluid to flow from the actuator 2 and the hydraulic power unit 4 into the first hydraulic accumulator 6 but inhibits flow in the reverse direction. The first hydraulic accumulator 6 is also connected to the pressure port 10a of the three-way pressure regulating valve 10.

The second hydraulic accumulator 7 is connected to the hydraulic fluid line 3 via a second non-return valve 9. The second non-return valve 9 allows hydraulic fluid to flow from the second accumulator 7 towards the actuator 2 but inhibits flow in the reverse direction. The second hydraulic accumulator 7 is also connected to the tank port 10b of the three-way pressure regulating valve 10 via the solenoid valve 11.

When the weight determination method is executed, hydraulic fluid passes from the hydraulic power unit 4 through pressure line 3 into the actuator chamber 2d and via the first non-return valve 8 into the first hydraulic accumulator 6 and via the pressure port 10a of the pressure regulating valve 10, past the pressure transmitter 5 and into the actuator chamber 2d.

During pressure build-up in the actuator 2, the first hydraulic accumulator 6 is loaded with a pressure generated by the effects coming from lifting the load, friction etc. The first non-return valve 8 assists in ensuring that the pressure in the first hydraulic accumulator 6 is not released during pressure build up in the actuator 2.

During actuator pressure build-up, the solenoid valve 11 is closed so as to prevent pressure relief via the tank port 10b of the pressure regulating valve 10.

The second non-return 9 valve assists in ensuring that pressure is not built up in the second hydraulic accumulator 7 during pressure build-up in the accumulator 2.

When the actuator pressure is to be lowered, the solenoid valve 11 is opened so as to allow flow from the actuator chamber 2d via the pressure regulating valve 10's tank port 10b through the solenoid valve 11 and into the second hydraulic accumulator 7. The second hydraulic accumulator 7 thus receives hydraulic fluid becoming redundant during the lowering of the actuator pressure.

The second non-return valve 9 ensures that as soon as the actuator 2 is relieved from pressure (but not before), the accumulated pressure in the second hydraulic accumulator 7 is relieved as well.

Although the above-described embodiments comprise a solenoid valve, use of other appropriate types of valves may be envisaged.

Also, although the above-described embodiments comprise a three-way pressure regulating valve, use of other appropriate types of valves may be envisaged. For instance, two two-way pressure regulating valves may be used instead of the three-way pressure regulating valve; one two-way pressure regulating valve for regulating the pressure up and one for regulating the pressure down.

### Example 1

With basis in an actuator pressure course as lined out in Fig. 2, the example below illustrates plausible examples of values as to measuring frequency, pressures etc when a fork lift truck lifting a load of unknown weight performs the weight determination method according to the first aspect of the invention. It is understood that the actual numbers will vary with the type of lifting device, seals, load, requirements as to weight determination precision and so on, so the numbers in the following are for exemplary purposes only.

On forklift trucks, the forks are usually arranged with a certain gearing in relation to the actuator, so that the forks move a distance corresponding to approximately twice the distance the hydraulic cylinder of the lifting device move. So, in case of a truck with a gearing ratio between hydraulic actuator and forks of say 1:2 all weighing results should be divided by 2.

However, for the sake of simplicity, in the example given below no account is taken of any such ratio of gearing. The load in the example below is simply assumed to be lifted directly by the actuator of the lifting device. It is understood, however, that the calculations could easily be modified to take into account any gearing ratio applicable for the weighing device in question.

The diameter of the cylinder of the hydraulic actuator in this example is 4 cm, which gives a pressure area of the hydraulic actuator of approximately A_{act} = 12.56 cm².

The hydraulic power unit of this example is able to provide a maximum operating pressure of P_{op,max} = 150 bar. That, together with the pressure face of the cylinder of the hydraulic actuator, gives a maximum lifting capacity of Fₘₐₓ = 1884 kg. With a scale division of the system of n = 1000, a weight determination precision e = Fₘₐₓ/n = 1.88, approximately e = 2 kg, is obtained.

In order to determine the weight of forks of the lifting device, the method according to the invention is performed once without any load on the forks. This only needs to be done once for a particular set up of forks, lifting device etc. as long as nothing in the setup is changed.

Hence, starting at the outset, hydraulic fluid is beginning to be injected into the actuator so as to make the actuator and the forks of the lifting device move. When the forks have reached their desired position above ground, the injection of hydraulic fluid into the actuator is stopped and the actuator is brought to a halt. The actual height is not important, only the forks should be lifted so as to be free of the ground.

When the step of adjusting the actuator pressure towards the first threshold pressure is initiated, the intermediate pressure, P_{intermediate}, is measured to be approximately 9 bar.

Now, the actuator pressure is measured with a measuring frequency of 1 measurement per 10 milliseconds. Hydraulic fluid corresponding to a pressure increase of Pₘₐₓ/(2·n) = 0.075 bar (before the first pressure threshold is met) is injected into the actuator every 20 milliseconds.

A pressure drop is registered indicating that the first threshold pressure, P_{threshold,high} has been met. The previously measured (higher) pressure is thus recorded as the first threshold pressure, P_{threshold,high}. It has been measured to be approximately P_{threshold,high} = 12 bar.

The pressure is then regulated directly back to the intermediate pressure Of P_{intermediate} = 9 bar .

Now, starting from the intermediate pressure, the step of adjusting the actuator pressure towards the second threshold pressure is initiated. Yet again, the applied measuring frequency is 1 measurement per 10 milliseconds. Hydraulic fluid corresponding to a pressure decrease of 0.075 bar (before the second pressure threshold is met) is withdrawn from the actuator every 20 milliseconds.

A pressure increase is registered indicating that the second threshold pressure, P_{threshold,low} has been met. The previously measured (lower) pressure is thus recorded as the second threshold pressure, P_{threshold,low}. It has been measured to be approximately P_{threshold,low} = 8 bar.

On this background and with knowledge of the relevant acceleration due to gravity and the pressure surface of the actuator, the weight of the forks can be determined to be m_{forks} = (P_{threshold,high}+P_{threshold,low})/2·A = 120.56 kg.

Having thus determined the weight of the forks of the lifting device, the procedure is carried out again now lifting the load, the weight of which is actually to be determined.

Hence, load and forks are lifted off ground and brought to a standstill, and the weight determination process is initiated from an intermediate pressure, which happens to be P_{intermediate} = 101 bar at the instant the process is initiated.

The measuring frequencies and the pressure regulating steps remain the same as described before; however, the threshold pressures have changed due to the alteration in load. The first threshold pressure is met at P_{threshold,high} = 102 bar, and the second threshold pressure is met at P_{threshold,low} = 98 bar.

Hence, the weight of the load and forks may thus be determined to be approximately m_{forks+load} = 596 kg, and the weight of the load alone m_{load} = 476 kg.

### List of reference signs:

- 1: Weighing device
- 2: Actuator
- 2a: Cylinder of actuator
- 2b: Piston of actuator
- 2c: Piston rod of actuator
- 2d: Actuator chamber
- 3: Hydraulic fluid line
- 4: Hydraulic power unit
- 4a: Hydraulic power unit's pressure line
- 4b: Hydraulic power unit's tank line
- 5: Pressure transmitter
- 6: First hydraulic accumulator
- 7: Second hydraulic accumulator
- 8: First non-return valve
- 9: Second non-return valve
- 10: Three-way pressure regulating valve
- 10a: Three-way pressure regulating valve's pressure port
- 10b: Three-way pressure regulating valve's tank port
- 10c: Three-way pressure regulating valve's outlet port
- 11: Solenoid valve
- 12: Flow control orifice

- t: Time
- P: Actuator pressure

## Claims

1. A method for determining the weight of a load using a hydraulic or pneumatic actuator of a lifting mechanism, wherein the actuator comprises a fixed part including an actuator chamber and a moveable part, wherein by means of a pressure transmitter the pressure prevailing in the actuator chamber is measured and the measured pressure is passed on to a processor or a computing unit, the method comprising the steps of:
increasing an actuator pressure in the actuator chamber to an initial actuator pressure value, in which static friction of the lifting mechanism is no longer able to maintain the position of the moveable part with the load and static friction transitions to lower dynamic friction which causes the actuator pressure to drop,
maintaining the actuator pressure to an actuator motion pressure until the load is lifted to a desired suspended position arbitrarily high above the ground,
adjusting the actuator pressure to a first threshold pressure (P_{threshold, high}), in which static friction of the lifting mechanism is no longer able to maintain the position of the load,
determining and storing a first threshold pressure value for the first threshold pressure, wherein at the initiation of an adjustment step of the actuator pressure to a first threshold pressure (P_{threshold, high}), the prevailing actuator pressure is measured and stored as an intermediate actuator pressure (P_{intermediate}), and as the actuator pressure is maintained to keep the moveable part of the actuator still in the suspended position, the intermediate actuator pressure (P_{intermediate}) is known to lie somewhere in between a first threshold pressure (P_{threshold, high}) where the static friction is overcome and the moveable part of the actuator suddenly begins to move upwards and a second pressure threshold (P_{threshold, low}) where static friction is overcome and the moveable part of the actuator suddenly begins to move downwards,
adjusting the actuator pressure to the second threshold pressure (P_{threshold, low}), in which static friction of the lifting mechanism is no longer able to maintain the position of the load and static friction transitions to lower dynamic friction which causes the actuator pressure to rise,
determining and storing a second threshold pressure value for the second threshold pressure,
calculating based on the stored first and second threshold pressure values the weight of the load, wherein the adjustment of the actuator pressure to at least the second threshold pressure takes place from the stored intermediate pressure between the first (P_{threshold, high}) and second (P_{threshold, low}) threshold pressures.

2. A method according to claim 1 , wherein the initial actuator pressure value is determined and used as the first threshold pressure value (P_{threshold, high}).

3. A method according to any of the preceding claims, wherein subsequently to the determination of the first threshold pressure value the actuator pressure is immediately adjusted to the intermediate pressure.

4. A method according to any of the preceding claims, wherein the adjustment from the intermediate pressure to the first and/or second threshold pressure is performed stepwise.

5. A method according to any of the preceding claims, wherein the calculation of the weight of the load based on the first and second threshold pressure values is determined by means of the mean value of the first and second threshold pressure values.

6. A weight determination unit for performing the method according to any of the claims 1 to 5 in collaboration with a lifting device, wherein a hydraulic fluid line (3) of the lifting device is connected to a pressure transmitter (5) of the weight determination unit, wherein the pressure transmitter is configured to measure an actuator pressure prevailing in an actuator chamber of the lifting device and to pass the measured actuator pressure on to a processor or computing unit.

7. The weight determination unit according to claim 6, wherein the weight determination unit is integratedly built into a fork lift truck.

8. The weight determination unit according to claim 6, wherein the weight determination unit is integratedly built into a wheel loader.

## Patentansprüche

1. Verfahren zum Bestimmen des Gewichts einer Last unter Verwendung eines hydraulischen oder pneumatischen Stellglieds eines Hebemechanismus, wobei das Stellglied einen festen Teil, der eine Stellgliedkammer enthält, und einen beweglichen Teil umfasst, wobei mittels eines Druckgebers der in der Stellgliedkammer vorherrschende Druck gemessen wird und der gemessene Druck an einen Prozessor oder eine Recheneinheit weitergegeben wird, wobei das Verfahren die folgenden Schritte umfasst:
Erhöhen eines Stellglieddrucks in der Stellgliedkammer auf einen Stellgliedausgangsdruckwert, bei dem die statische Reibung des Hebemechanismus nicht mehr in der Lage ist, die Position des beweglichen Teils mit der Last zu halten, und die statische Reibung in eine Reibung mit geringerer Dynamik übergeht, was dazu führt, dass der Stellglieddruck abfällt,
Halten des Stellglieddrucks auf einem Stellgliedbewegungsdruck, bis die Last auf eine gewünschte Hebeposition beliebig hoch über den Boden angehoben ist,
Einstellen des Stellglieddrucks auf einen ersten Schwellendruck (P_{Schwelle, hoch}), bei dem die statische Reibung des Hebemechanismus nicht mehr in der Lage ist, die Position der Last zu halten,
Bestimmen und Speichern eines ersten Druckschwellenwerts für den ersten Schwellendruck, wobei zu Beginn des Einstellungsschritts des Stellglieddrucks auf einen ersten Schwellendruck (P_{Schwelle, hoch}) der vorherrschende Stellglieddruck gemessen und als Stellgliedzwischendruck (P_{Zwischen}) gespeichert wird, und wenn der Stellglieddruck erhalten wird, um den beweglichen Teil des Stellglieds in der Hebeposition zu halten, liegt der Stellgliedzwischendruck (P_{Zwischen}) zwischen einem ersten Schwellendruck (P_{Schwelle, hoch}), bei dem die statische Reibung überwunden wird und der bewegliche Teil des Stellglieds plötzlich beginnt, sich nach oben zu bewegen, und einem zweiten Schwellendruck (P_{Schwelle, niedrig}), bei dem die statische Reibung überwunden wird und der bewegliche Teil des Stellglieds plötzlich beginnt, sich nach unten zu bewegen,
Einstellen des Stellglieddrucks auf den zweiten Schwellendruck (P_{Schwelle, niedrig}), bei dem die statische Reibung des Hebemechanismus nicht mehr in der Lage ist, die Position der Last zu halten, und die statische Reibung in eine Reibung mit geringerer Dynamik übergeht, was dazu führt, dass der Stellglieddruck ansteigt,
Bestimmen und Speichern eines zweiten Druckschwellenwerts für den zweiten Schwellendruck,
Berechnen des Gewichts der Last auf Grundlage des gespeicherten ersten und zweiten Druckschwellenwerts, wobei das Einstellen des Stellglieddrucks auf mindestens den zweiten Schwellendruck vom gespeicherten Zwischendruck zwischen dem ersten (P_{Schwelle, hoch}) und dem zweiten (P_{Schwelle, niedrig}) Schwellendruck erfolgt.

2. Verfahren nach Anspruch 1, wobei der Stellgliedausgangsdruckwert als erster Druckschwellenwert (P_{Schwelle, hoch}) bestimmt und verwendet wird.

3. Verfahren nach einem der vorstehenden Ansprüche, wobei der Stellglieddruck nach dem Bestimmen des ersten Druckschwellenwerts sofort auf den Zwischendruck eingestellt wird.

4. Verfahren nach einem der vorstehenden Ansprüche, wobei das Einstellen vom Zwischendruck auf den ersten bzw. zweiten Schwellendruck schrittweise erfolgt.

5. Verfahren nach einem der vorstehenden Ansprüche, wobei das Berechnen des Gewichts der Last auf Grundlage des ersten und zweiten Druckschwellenwerts über den Mittelwert des ersten und zweiten Druckschwellenwerts bestimmt wird.

6. Gewichtsbestimmungseinheit zum Durchführen des Verfahrens nach einem der Ansprüche 1 bis 5 zusammen mit einer Hebevorrichtung, wobei eine Hydraulikfluidleitung (3) der Hebevorrichtung mit einem Druckgeber (5) der Gewichtsbestimmungseinheit verbunden ist, wobei der Druckgeber dazu ausgelegt ist, einen in einer Stellgliedkammer der Hebevorrichtung vorherrschenden Stellglieddruck zu messen und den gemessenen Stellglieddruck an einen Prozessor oder eine Recheneinheit weiterzugeben.

7. Gewichtsbestimmungseinheit nach Anspruch 6, wobei die Gewichtsbestimmungseinheit in einen Gabelstapler integriert ist.

8. Gewichtsbestimmungseinheit nach Anspruch 6, wobei die Gewichtsbestimmungseinheit in einen Radlader integriert ist.

## Revendications

1. Procédé pour déterminer le poids d'une charge en utilisant un actionneur hydraulique ou pneumatique d'un mécanisme de levage, où l'actionneur comprend une partie fixe comportant une chambre d'actionneur et une partie mobile, où, au moyen d'un transmetteur de pression, la pression régnant dans la chambre d'actionneur est mesurée et la pression mesurée est transmise à un processeur ou à une unité de calcul, le procédé comprenant les étapes consistant :
à augmenter une pression d'actionneur dans la chambre d'actionneur jusqu'à une valeur de pression d'actionneur initiale, où le frottement statique du mécanisme de levage n'est plus capable de maintenir la position de la partie mobile avec la charge et le frottement statique se transforme en un frottement dynamique inférieur qui provoque la baisse de la pression d'actionneur,
à maintenir la pression d'actionneur à une pression de mouvement d'actionneur jusqu'à ce que la charge soit soulevée jusqu'à une position suspendue souhaitée arbitrairement élevée au-dessus du sol,
à ajuster la pression d'actionneur à une première pression seuil (P_{threshold, high}), où le frottement statique du mécanisme de levage n'est plus capable de maintenir la position de la charge
à déterminer et stocker une première valeur de pression seuil pour la première pression seuil, où, au début d'une étape d'ajustement de la pression d'actionneur à une première pression seuil (P_{threshold, high}), la pression d'actionneur dominante est mesurée et stockée en tant que pression d'actionneur intermédiaire (P_{intermediate}), et à mesure que la pression d'actionneur est maintenue pour garder la partie mobile de l'actionneur toujours dans la position suspendue, la pression d'actionneur intermédiaire (P_{intermediate}) est connue pour se situer quelque part entre une première pression seuil (P_{threshold, high}) où le frottement statique est surmonté et la partie mobile de l'actionneur commence soudainement à se déplacer vers le haut et une deuxième pression seuil (P_{threshold, low}) où le frottement statique est surmonté et la partie mobile de l'actionneur commence soudainement à se déplacer vers le bas,
à ajuster la pression d'actionneur à la deuxième pression seuil (P_{threshold, low}), où le frottement statique du mécanisme de levage n'est plus en mesure de maintenir la position de la charge et le frottement statique se transforme en un frottement dynamique inférieur qui provoque l'accroissement de la pression d'actionneur,
à déterminer et stocker une deuxième valeur de pression seuil pour la deuxième pression seuil,
à calculer, sur la base des première et deuxième valeurs de pression seuil stockées, le poids de la charge, où l'ajustement de la pression d'actionneur à au moins la deuxième pression seuil a lieu à partir de la pression intermédiaire stockée entre les première (P_{threshold, high}) et deuxième (P_{threshold, low}) pressions seuils.

2. Procédé selon la revendication 1, dans lequel la valeur de pression d'actionneur initiale est déterminée et utilisée comme étant la première valeur de pression seuil (P_{threshold, high}).

3. Procédé selon l'une des revendications précédentes, dans lequel, après la détermination de la première valeur de pression seuil, la pression d'actionneur est immédiatement ajustée à la pression intermédiaire.

4. Procédé selon l'une des revendications précédentes, dans lequel l'ajustement de la pression intermédiaire à la/aux première et/ou deuxième pression(s) seuil(s) est réalisé par étapes.

5. Procédé selon l'une des revendications précédentes, dans lequel le calcul du poids de la charge sur la base des première et deuxième valeurs de pression seuil est déterminé au moyen de la valeur moyenne des première et deuxième valeurs de pression seuil.

6. Unité de détermination de poids pour réaliser le procédé selon l'une des revendications 1 à 5 en collaboration avec un dispositif de levage, où une conduite de fluide hydraulique (3) du dispositif de levage est reliée à un transmetteur de pression (5) de l'unité de détermination de poids, où le transmetteur de pression est configuré pour mesurer une pression d'actionneur régnant dans une chambre d'actionneur du dispositif de levage et pour transmettre la pression d'actionneur mesurée à un processeur ou à une unité de calcul.

7. Unité de détermination de poids selon la revendication 6, dans laquelle l'unité de détermination de poids est incorporée en tant que partie intégrante dans un chariot élévateur à fourche.

8. Unité de détermination de poids selon la revendication 6, dans laquelle l'unité de détermination de poids est incorporée en tant que partie intégrante dans une chargeuse sur pneus.
